# EUROPÄISCHE PATENTSCHRIFT

(11) **EP 1 154 198 B1**
(45) Veröffentlichungstag und Bekanntmachung des Hinweises auf die Patenterteilung: **14.06.2006**
(21) Anmeldenummer: 01111012.9
(22) Anmeldetag: 08.05.2001
(51) Int. Cl.: F21S 8/10, F21V 8/00, F21W 101/14

(54) **Stabförmiger Lichtleiter**
Rod-shaped light guide
Guide de lumière en forme de barre

(30) Priorität: 10.05.2000 DE 10022779
(43) Veröffentlichungstag der Anmeldung: 14.11.2001
(73) Patentinhaber: Hella KGaA Hueck & Co., 59552 Lippstadt (DE)
(72) Erfinder: Neumann, Cornelius Dr., 33649 Bielefeld (DE)

(56) Entgegenhaltungen:
- EP-A- 0 333 203
- EP-A- 1 167 874
- DE-A- 4 129 094
- FR-A- 2 464 856
- US-A- 5 987 199

## Beschreibung

Die Erfindung betrifft einen stabförmigen Lichtleiter, insbesondere für eine Beleuchtungseinrichtung für Kraftfahrzeuge, mit mindestens einer Stirnfläche als Lichteinkoppelfläche und einer in Richtung einer Längsachse angeordneten, quer zur Längsachse abstrahlenden Lichtaustrittsfläche, einer der Lichtaustrittsfläche gegenüberliegenden reflektierenden Fläche, wobei zwischen der Lichtaustrittsfläche und der reflektierenden Fläche mindestens eine erste defokussierende Seitenfläche angeordnet ist.

Stabförmige Lichtleiter werden bei Kraftfahrzeugen z. B. als Signalleuchte oder zur Beleuchtung von Anzeigeeinrichtungen verwendet.

Aus der DE 41 29 094 A1 und aus der DE 198 03 518 A1 sind stabförmige Lichtleiter bekannt, die eine quer zu ihrer Längsrichtung abstrahlenden Lichtaustrittsfläche aufweisen. Den Lichtaustrittsflächen gegenüberliegend sind jeweils reflektierende Flächen angeordnet. Die reflektierenden Flächen weisen eine Vielzahl von Prismen auf, die quer zur Längsachse der Stabförmigen Lichtleiter angeordnet sind. Die stabförmigen Lichtleiter sind im Wesentlichen zylindrisch ausgebildet. Über mindestens eine der Stirnflächen der Lichtleiter wird Licht eingekoppelt, das nach Totalreflexion über die Prismen, die verspiegelt sind, radial ausgekoppelt wird.

Nachteilig bei den bekannten Lichtleitern mit im Wesentlichen kreisrunden Querschnitt ist, dass aufgrund ihres punktsymmetrischen Aufbaues nur ein Anteil des in die Lichtleiter eingekoppelten Lichtes einer punkt- oder wenig diffus abstrahlenden Lichtquelle über die Prismen und die Lichtaustrittsfläche ausgekoppelt wird. Lichtstrahlen, welche vertikal außerhalb des Erfassungsbereiches verlaufen, pendeln ungenutzt durch den Lichtleiter.

Aus der FR-A-2 464 856 ist ein stabförmiger Lichtleiter bekannt, bei dem zwischen der Lichtauskoppelfläche und der reflektierenden Fläche mindestens eine erste defokussierende Seitenfläche zur Formung des abgestrahlten Lichts angeordnet ist. Bei dieser bekannten Ausführungsform erweist sich als nachteilig, dass die reflektierende Fläche keine lichtablenkenden Mittel aufweist und somit auch über die erste defokussierende Seitenfläche nur eine geringe Optimierung des Wirkungsgrads des stabförmigen Lichtleiters erreicht werden kann.

Aufgabe der vorliegenden Erfindung ist es daher, die bekannten stabförmigen Lichtleiter so zu verbessern, dass das Verhältnis von eingekoppelten zu ausgekoppelten Licht verbessert und eine Wirkungsgradsteigerung erreicht wird.

Diese Aufgabe wird erfindungsgemäß durch die Merkmale des Anspruchs 1 gelöst.

Durch die erste defokussierende Seitenfläche wird auf sie auftreffendes Licht durch Totalreflexion zerstreut und gleichmäßiger über den Querschnitt des stabförmigen Lichtleiters verteilt, so dass eine Auskopplung sonst nicht genutzten Lichtes über die Lichtaustrittsfläche ermöglicht wird. Diese effiziente Auskopplung bewirkt eine lichttechnische Wirkungsgradsteigerung des stabförmigen Lichtleiters.

Gemäß einer bevorzugten Ausführungsform der Erfindung ist zwischen der Lichtaustrittsfläche und der reflektierenden Fläche der ersten defokussierenden Seitenfläche gegenüberliegend eine zweite defokussierende Seitenfläche angeordnet.

Die Anordnung der zweiten defokussierenden Seitenfläche führt in Verbindung mit der ersten defokussierenden Seitenfläche zu einer erheblichen lichttechnischen Wirkungsgradsteigerung.

Nach einer weiteren bevorzugten Ausführungsform der Erfindung sind die Seitenflächen konkav nach innen gewölbt, so dass auf einfache Weise eine defokussierende bzw. zerstreuende Wirkung erzeugt wird.

Gemäß einer weiteren bevorzugten Ausführungsform der Erfindung sind die beiden einander gegenüberliegenden Seitenflächen zur Lichtaustrittsfläche hin trichterförmig voneinander weggerichtet, so dass ein "trompetenförmiger" Querschnitt entsteht.

Diese trompetenförmige Anordnung der defokussierenden Seitenflächen bewirkt eine weitere Homogenisierung der Lichtverteilung innerhalb des stabförmigen Lichtleiters und führt damit zu einer weiteren Steigerung des lichttechnischen Wirkungsgrades.

Nach einer weiteren bevorzugten Ausführungsform der Erfindung ist der Lichteinkopplungsfläche eine etwa punktförmig abstrahlende Lichtquelle vorgelagert. Die Lichtquelle ist dabei als eine Leuchtdiode (LED) oder auch als wenig diffus abstrahlende Lichtquelle in Form einer Glühlampe mit Ellipsoidreflektor ausgebildet.

Insbesondere bei Verwendung von punktförmigen oder wenig diffus abstrahlenden Lichtquellen wird durch die erfindungsgemäße Ausbildung des stabförmigen Lichtleiters eine lichttechnische Wirkungsgradsteigerung erzielt.

Gemäß einer weiteren bevorzugten Ausführungsform der Erfindung sind die lichtablenkenden Mittel der reflektierenden Fläche als eine Vielzahl von quer zur Längsachse angeordnete Prismen ausgebildet.

Durch eine entsprechende Ausbildung der quer zu Längsachse angeordneten Prismen lässt sich ebenfalls eine Steigerung des lichttechnischen Wirkungsgrades des stabförmigen Lichtleiters erzielen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine Seitenansicht eines stabförmigen Lichtleiters in schematischer Darstellung,
- Figur 2:: einen Querschnitt durch den stabförmigen Lichtleiter von Figur 1,
- Figur 3:: eine räumliche Darstellung eines stabförmigen Lichtleiters und
- Figur 4:: einen Querschnitt durch einen Lichtleiter nach dem Stand der Technik, der im Wesentlichen kreisrund ausgebildet ist.

Ein stabförmiger Lichtleiter 1 besteht im Wesentlichen aus einer ersten Stirnfläche 2, einer zweiten Stirnfläche 3, einer reflektierenden Fläche 4, einer Lichtaustrittsfläche 5, einer ersten defokussierenden Seitenfläche 6 und einer zweiten defokussierenden Seitenfläche 7.

Quer zu seiner Längsachse 8 weist der stabförmige Lichtleiter 1 an einem ersten Ende 9 die erste Stirnfläche 2 und an seinem dem ersten Ende 9 abgewandten zweiten Ende 10 die zweite Stirnfläche 3 auf. An seiner Unterseite 11 wird der stabförmige Lichtleiter 1 von der reflektierenden Fläche 4 und an seiner der Unterseite 11 gegenüberliegenden Oberseite 12 wird der Lichtleiter 1 durch die Lichtaustrittsfläche 5 begrenzt. Seitlich wird der stabförmige Lichtleiter 1 durch die beiden einander gegenüberliegenden defokussierenden Seitenflächen 6, 7 begrenzt. Die reflektierende Fläche 4 ist über die Seitenflächen 6, 7 mit der Lichtaustrittsfläche 5 verbunden.

Den Stirnflächen 2, 3 ist jeweils eine punktförmige Lichtquelle 13 vorgelagert. Die Lichtquelle 13 ist z. B. als eine Fotodiode (LED) ausgebildet. Die Stirnflächen 2, 3 sind als Lichteinkoppelflächen ausgebildet. Die reflektierende Fläche 4 weist lichtablenkende Mittel auf, die z. B. als eine Vielzahl von quer zur Längsachse 8 angeordnete Prismen 14 ausgebildet sind. Die defokussierenden Seitenflächen 6, 7 sind konkav nach innen hin ausgeformt. Dabei sind die beiden gegenüberliegenden Seitenflächen 6, 7 zur Lichtaustrittsfläche 5 hin trichterförmig voneinander weggerichtet. Die Seitenflächen 7, 8 weisen somit am Übergang zur Lichtaustrittsfläche 5 hin einen größeren Abstand auf als zum Übergang zur reflektierenden Fläche 4.

Das von den Lichtquellen 13 ausgestrahlte Licht wird über die Stirnflächen 2, 3, die als Lichteinkoppelflächen ausgebildet sind, in den stabförmigen Lichtleiter 1 eingekoppelt und durch Totalreflexion weitergeleitet. Auf die Prismen 14 der reflektierenden Fläche 4 auftreffendes Licht wird reflektiert und tritt auf der den Prismen 14 gegenüberliegenden Lichtaustrittsfläche 5 aus. Nicht von den Prismen 14 erfasste Lichtstrahlen werden an den zerstreuenden Seitenflächen total reflektiert, zerstreut und über den Stabquerschnitt verteilt, so dass ebenfalls eine Auskoppelung über die Lichtaustrittsfläche 5 ermöglicht wird.

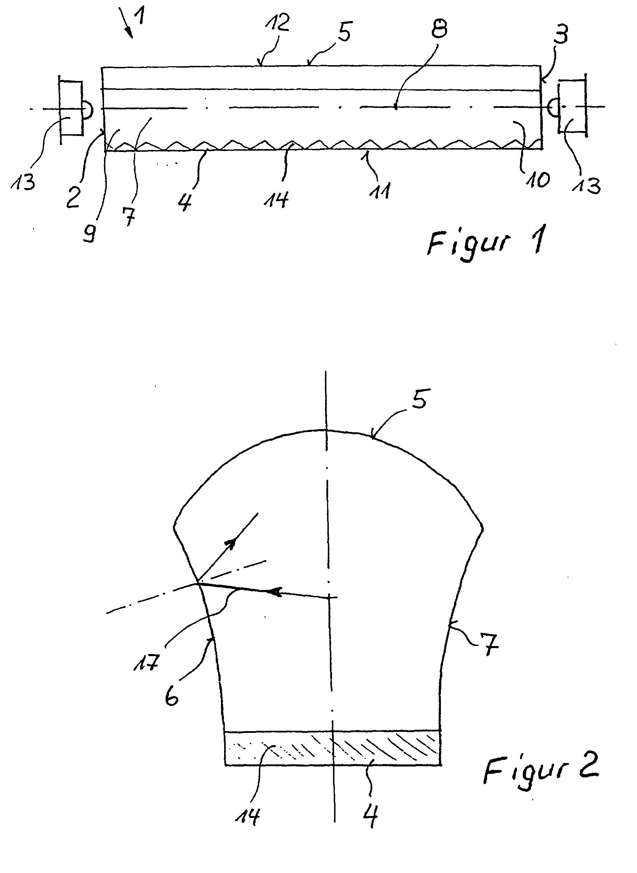

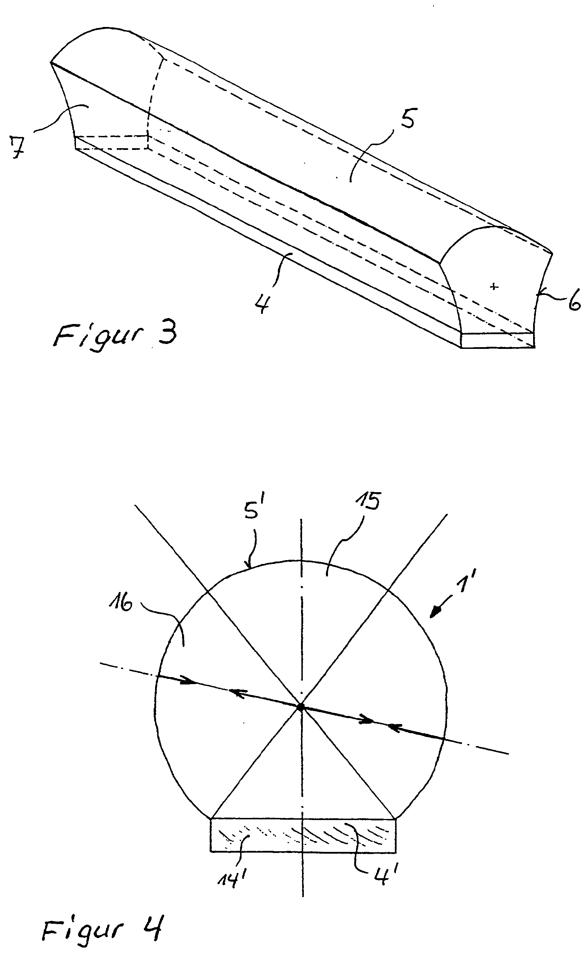

In Figur 4 ist ein im Wesentlichen kreisrunder Querschnitt eines stabförmigen Lichtleiters 1 nach dem Stand der Technik dargestellt. Die der reflektierenden Fläche 4' gegenüberliegende Lichtaustrittsfläche 5' wird durch einen Erfassungsbereich 15 der Prismen 14 begrenzt. Dadurch entsteht zwischen Lichtaustrittsfläche 5' und reflektierender Fläche 4' ein ungenutzter Bereich 16. Vertikal außerhalb des Erfassungsbereiches 15 verlaufende Lichtstrahlen 17 pendeln ungenutzt in dem ungenutzten Bereich 16. In dem erfindungemäßen Querschnitt nach Figur 2 werden von der Mitte bzw. Längsachse 8 radial ausgehende Lichtstrahlen 18 an den konkaven Seitenflächen 6, 7 gebrochen und können ausgekoppelt werden.

## Patentansprüche

1. Stabförmiger Lichtleiter, insbesondere für eine Beleuchtungseinrichtung für Kraftfahrzeuge, mit mindestens einer Stirnfläche (2, 3) als Lichteinkoppelfläche und einer in Richtung einer Längsachse angeordneten, quer zur Längsachse abstrahlenden Lichtaustrittsfläche (5), einer der Lichtaustrittsfläche (5) gegenüberliegenden reflektierenden Fläche (4), wobei zwischen der Lichtaustrittsfläche (5) und der reflektierenden Fläche (4) mindestens eine erste defokussierende Seitenfläche (6) angeordnet ist, **dadurch gekennzeichnet, dass** zwischen der Lichtaustrittsfläche (5) und der reflektierenden Fläche (4) der ersten defokussierenden Seitenfläche (6) gegenüberliegend eine zweite defokussierende Seitenfläche (7) angeordnet ist; und dass die reflektierende Fläche (4) lichtablenkende Mittel (14) aufweist.

2. Stabförmiger Lichtleiter nach Anspruch 1, **dadurch gekennzeichnet, dass** die defokussierenden Seitenflächen (6, 7) konkav ausgebildet sind.

3. Stabförmiger Lichtleiter nach Anspruch 2, **dadurch gekennzeichnet, dass** die beiden gegenüberliegenden Seitenflächen (6, 7) zur Lichtaustrittsfläche (5) hin trichterförmig voneinander weggerichtet sind.

4. Stabförmiger Lichtleiter nach einem der Ansprüche 1 bis 3; **dadurch gekennzeichnet dass** der Stirnfläche (2, 3) eine etwa punktförmige abstrahlende Lichtquelle (13) vorgelagert ist.

5. Stabförmiger Lichtleiter nach Anspruch 4, **dadurch gekennzeichnet, dass** die Lichtquelle (13) als eine Glühlampe mit Ellipsoidreflektor ausgebildet ist.

6. Stabförmiger Lichtleiter nach Anspruch 4, **dadurch gekennzeichnet, dass** die Lichtquelle (13) als eine Leuchtdiode ausgebildet ist.

7. Stabförmiger Lichtleiter nach einem der Ansprüche 1 bis 6, **dadurch gekennzeichnet dass** die lichtablenkenden Mittel der reflektierenden Fläche (4) als eine Vielzahl von quer zur Längsachse angeordnete Prismen (14) ausgebildet sind.

## Claims

1. Rod-shaped light guide, in particular for an illuminating device for motor vehicles, comprising at least one end surface (2, 3) as light coupling surface and a light emission surface (5) arranged in the direction of a longitudinal axis and emitting transversely to the longitudinal axis (5), a reflecting surface (4) positioned opposite the light emission surface (5), and between the light emission surface (5) and the reflecting surface (4) is arranged at least one first defocusing side surface (6), **characterised in that** between the light emission surface (5) and the reflecting surface (4) of the first defocusing side surface (6) is arranged an opposite second defocusing side surface (7), and the reflecting surface (4) comprises light deflecting means (14).

2. Rod-shaped light guide according to Claim 1, **characterised in that** the defocusing side surfaces (6, 7) are of concave design.

3. Rod-shaped light guide according to Claim 2, **characterised in that** the two opposite side surfaces (6, 7) are towards the light emission surface (5) funnelshaped oriented away from one another.

4. Rod-shaped light guide according to one of Claims 1 to 3, **characterised in that** ahead of the end surface (2, 3) is mounted a light source (13) which radiates in the shape of a dot.

5. Rod-shaped light guide according to Claim 4, **characterised in that** the light source (13) is designed as a light bulb with ellipsoid reflector.

6. Rod-shaped light guide according to Claim 4, **characterised in that** the light source (13) is designed as a light diode.

7. Rod-shaped light guide according to one of Claims 1 to 6, **characterised in that** the light deflecting means of the reflecting surface (4) are designed as a plurality of prisms (14) arranged transversely to the longitudinal axis.

## Revendications

1. Guide de lumière en forme de barreau, en particulier pour un système d'éclairage pour véhicules automobiles, comportant au moins une face frontale (2, 3) servant de surface de couplage de lumière et une surface de sortie de lumière (5) agencée en direction d'un axe longitudinal et rayonnant transversalement à l'axe longitudinal, une surface (4) réfléchissante opposée à la surface de sortie de lumière (5), au moins une première surface latérale défocalisante (6) étant agencée entre la surface de sortie de lumière (5) et la surface réfléchissante (4), **caractérisé en ce qu'**une deuxième surface latérale défocalisante (7) est agencée à l'opposé entre la surface de sortie de lumière (5) et la surface réfléchissante (4) de la première surface latérale défocalisante (6), et **en ce que** la surface réfléchissante (4) présente des moyens de déflexion de lumière (14).

2. Guide de lumière en forme de barreau selon la revendication 1, **caractérisé en ce que** les surfaces latérales défocalisantes (6, 7) sont réalisées concaves.

3. Guide de lumière en forme de barreau selon la revendication 2, **caractérisé en ce que** les deux surfaces latérales (6, 7) opposées sont orientées en forme d'entonnoir en éloignement l'une de l'autre vers la surface de sortie de lumière (5).

4. Guide de lumière en forme de barreau selon l'une des revendications 1 à 3, **caractérisé en ce qu'**en amont de la face frontale (2, 3) est montée une source lumineuse rayonnante approximativement en forme de point.

5. Guide de lumière en forme de barreau selon la revendication 4, **caractérisé en ce que** la source lumineuse (13) est réalisée sous forme d'une lampe à incandescence avec réflecteur ellipsoïde.

6. Guide de lumière en forme de barreau selon la revendication 4, **caractérisé en ce que** la source lumineuse (13) est réalisée sous forme d'une diode électroluminescente.

7. Guide de lumière en forme de barreau selon l'une des revendications 1 à 6, **caractérisé en ce que** les moyens de déflexion de lumière de la surface réfléchissante (4) sont réalisés sous forme d'une pluralité de prismes (14) agencés transversalement à l'axe longitudinal.
